# EUROPEAN PATENT APPLICATION

(11) **EP 4 600 405 A1**
(43) Date of publication of application: **13.08.2025**
(21) Application number: 23874659.8
(22) Date of filing: 21.09.2023
(51) Int. Cl.: C23F 11/02, B60G 21/055, F16F 1/02, F16F 1/14

(54) **RUST PROOFING METHOD FOR CYLINDRICAL MEMBER**

(30) Priority: 05.10.2022 JP 2022161109
(71) Applicant: NHK Spring Co., Ltd., Yokohama-shi, Kanagawa 236-0004 (JP)
(72) Inventor: NAKAMURA, Koji, Yokohama-shi, Kanagawa 236-0004 (JP); YAJIMA, Takashi, Yokohama-shi, Kanagawa 236-0004 (JP)
(74) Representative: Hoffmann Eitle
(86) International application number: PCT/JP2023/034230
(87) International publication number: WO 2024/075530

(57) **Abstract**

A rust-proofing treatment method for a cylindrical member according to the present invention is a rust-proofing treatment method for a cylindrical member, and includes a first end forming step of forming a first end at one end of the cylindrical member to seal the one end, a rust-proofing material inserting step of inserting a rust-proofing material including a scattering-suppressing material, a volatile rust-proofing agent covered with the scattering-suppressing material, and a holding sheet configured to hold the volatile rust-proofing agent into the cylindrical member, a second end forming step of forming a second end at an end of the cylindrical member opposite to the first end to seal the end after the rust-proofing material is accommodated in the cylindrical member, and a rust-proofing agent vaporization step of vaporizing the volatile rust-proofing agent.

## Description

### Field

The present invention relates to a rust-proofing treatment method for a cylindrical member.

### Background

A stabilizer used in a vehicle or the like is attached to the vehicle to stabilize a posture of the vehicle. A known stabilizer is a deformed hollow cylindrical member for reducing a vehicle weight. Here, when a stabilizer is manufactured using a cylindrical member, it is required that inside of the stabilizer has a rust-proofing function. For example, in Patent Literature 1, a volatile powdered rust-proofing agent is enclosed inside a stabilizer, and a rust-proofing film is formed inside the stabilizer by vaporizing the volatile rust-proofing agent.

### Citation List

### Patent Literature

Patent Literature 1: WO 2017/170787 A

### Summary

### Technical Problem

However, since the volatile rust-proofing agent is in form of a powder, it is difficult to handle and therefore rust-proofing treatment can be difficult.

The present invention is made in view of the above, and has an object to provide a rust-proofing method for a cylindrical member that can easily perform rust-proofing treatment on inside of the cylindrical member. Solution to Problem

To solve the above-described problem and achieve the object, a rust-proofing treatment method for a cylindrical member according to the present invention includes: a first end forming step of forming a first end at one end of the cylindrical member to seal the one end; a rust-proofing material inserting step of inserting a rust-proofing material including a scattering-suppressing material, a volatile rust-proofing agent covered with the scattering-suppressing material, and a holding sheet configured to hold the volatile rust-proofing agent into the cylindrical member; a second end forming step of forming a second end at an end of the cylindrical member opposite to the first end to seal the end after the rust-proofing material is accommodated in the cylindrical member; and a rust-proofing agent vaporization step of vaporizing the volatile rust-proofing agent.

Moreover, in the above-described rust-proofing treatment method for the cylindrical member according to the present invention, the holding sheet has a sheet shape and is configured to hold the volatile rust-proofing agent and the scattering-suppressing material.

Moreover, in the above-described rust-proofing treatment method for the cylindrical member according to the present invention, the holding sheet has a bag shape and is configured to enclose the volatile rust-proofing agent and the scattering-suppressing material.

Moreover, in the above-described rust-proofing treatment method for the cylindrical member according to the present invention, the scattering-suppressing material is a viscous liquid or solid at room temperature. Advantageous Effects of Invention

According to the present invention, it is possible to easily perform rust-proofing treatment on the inside of the stabilizer.

### Brief Description of Drawings

[FIG. 1] FIG. 1 is a perspective view illustrating an example of a suspension mechanism including a stabilizer according to an embodiment of the present invention.
[FIG. 2] FIG. 2 is a plan view illustrating a configuration of the stabilizer illustrated in FIG. 1.
[FIG. 3] FIG. 3 is a perspective view illustrating a configuration of a cylindrical member for producing the stabilizer according to the embodiment of the present invention.
[FIG. 4] FIG. 4 is a perspective view for illustrating a configuration of a rust-proofing material used in rust-proofing treatment.
[FIG. 5] FIG. 5 is a cross-sectional view taken along a line A-A illustrated in FIG. 4.
[FIG. 6] FIG. 6 is a diagram (part 1) for illustrating rust-proofing treatment applied to inside of the stabilizer according to the embodiment of the present invention.
[FIG. 7] FIG. 7 is a diagram (part 2) for illustrating the rust-proofing treatment applied to the inside of the stabilizer according to the embodiment of the present invention.
[FIG. 8] FIG. 8 is a diagram (part 3) for illustrating the rust-proofing treatment applied to the inside of the stabilizer according to the embodiment of the present invention.
[FIG. 9] FIG. 9 is a diagram (part 4) for illustrating the rust-proofing treatment applied to the inside of the stabilizer according to the embodiment of the present invention.
[FIG. 10] FIG. 10 is a perspective view for illustrating a configuration of a rust-proofing material according to a modification example.

### Description of Embodiments

Hereinafter, modes (hereinafter, referred to as "embodiments") for carrying out the present invention will be described with reference to the accompanying drawings. The drawings are schematic, and a relationship between thickness and width of each part, a thickness ratio of each part, and the like may differ from the actual ones, and the drawings may also include parts whose dimensional relationships and ratios differ from each other.

### (Embodiments)

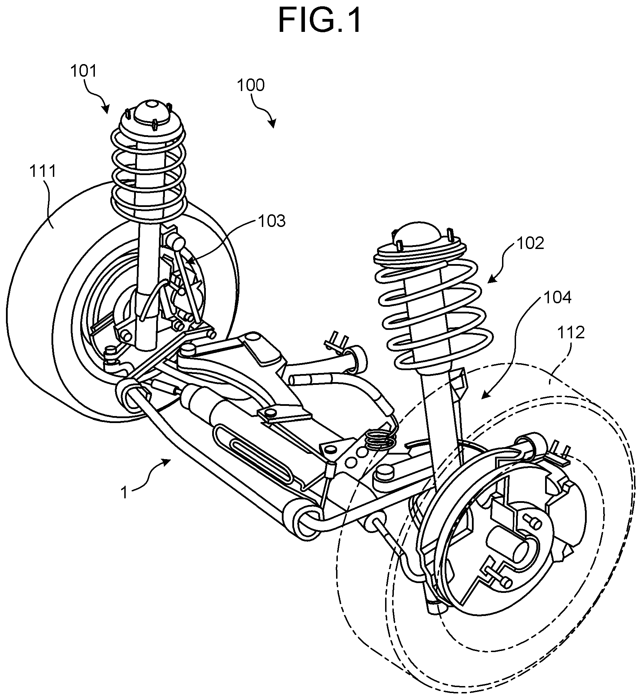

FIG. 1 is a perspective view illustrating an example of a suspension mechanism including a stabilizer according to the embodiment of the present invention. A suspension mechanism 100 illustrated in FIG. 1 includes a stabilizer 1, suspensions 101 and 102, and links 103 and 104. The suspensions 101 and 102 respectively include elastic coil springs. When the suspension mechanism 100 is installed in an automobile, it is provided for each of tires 111 and 112 (for example, front wheels) and absorbs vibrations transmitted from the tires 111 and 112 in response to unevenness of a road surface. The stabilizer 1 and the suspensions 101 and 102 are connected via the respective links 103 and 104.

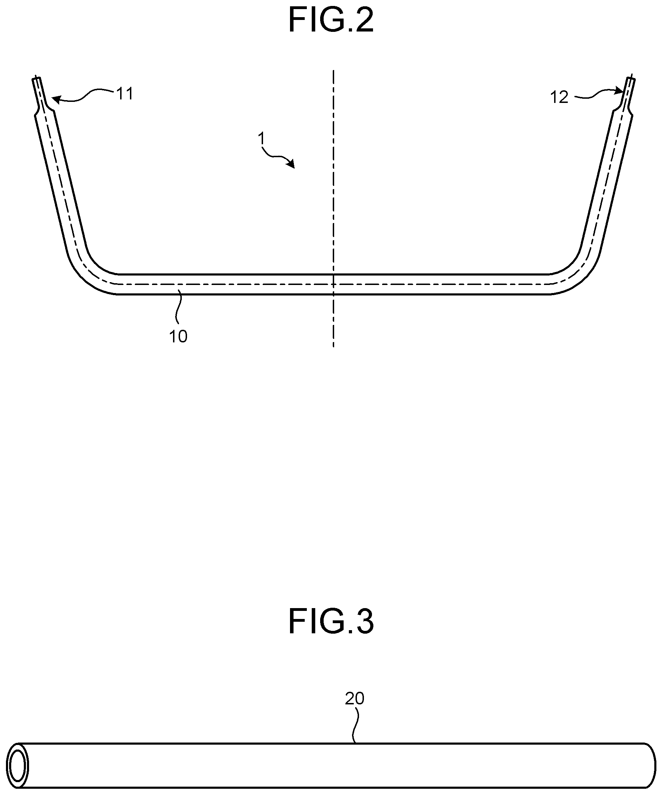

FIG. 2 is a plan view illustrating a configuration of the stabilizer illustrated in FIG. 1. The stabilizer 1 is a hollow columnar member (cylindrical member) made of metal or various fibers (for example, carbon fibers), and is made of a material having a 0.2% yield strength in the range of 1000 MPa to 1600 MPa, for example. The stabilizer 1 has a main body 10, a first end 11 connected to one end of the main body 10, and a second end 12 connected to the other end of the main body 10.

The main body 10 has a central portion that extends linearly and both ends of the main body 10 that are bent.

The first end 11 and the second end 12 each have a flattened shape formed by crushing a cylindrical member. Further, the first end 11 and the second end 12 are formed with through holes (not illustrated) through which fastening members are inserted.

Next, the rust-proofing treatment for inside of the stabilizer 1 will be described with reference to FIGS. 3 to 9. The stabilizer 1 is produced by processing a base material.

FIG. 3 is a perspective view illustrating a configuration of a cylindrical member for producing a stabilizer according to one embodiment of the present invention. The cylindrical member 20 that serves as the base material of the stabilizer 1 has an elongated cylindrical shape with uniform inner and outer diameters. A thickness of the cylindrical member 20 is the same as that of the main body 10 of the stabilizer 1, for example.

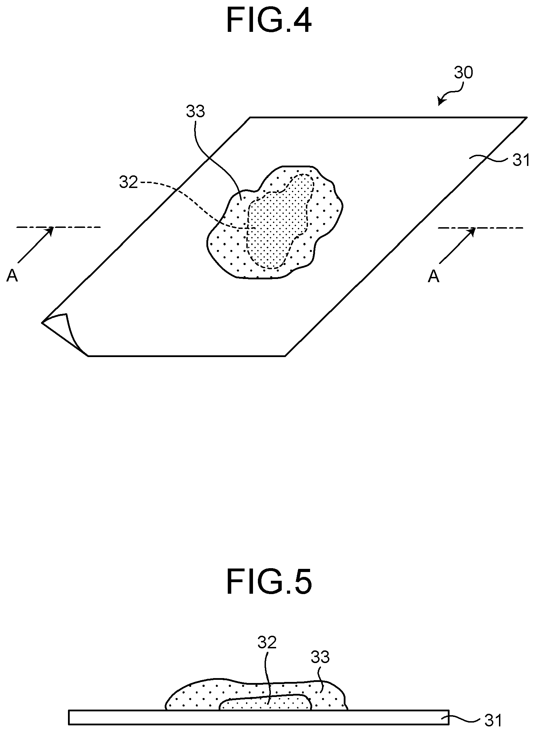

FIG. 4 is a perspective view for illustrating a configuration of a rust-proofing material used in the rust-proofing treatment. FIG. 5 is a cross-sectional view taken along a line A-A illustrated in FIG. 4. In this embodiment, a rust-proofing material 30 is used for the rust-proofing treatment. The rust-proofing material 30 includes a holding sheet 31, a volatile rust-proofing agent 32, and a scattering-suppressing material 33. The rust-proofing material 30 is formed by covering the volatile rust-proofing agent 32 placed on the holding sheet 31 with the scattering-suppressing material 33 (see FIG. 4).

The holding sheet 31 is formed using, for example, Japanese paper, paraffin paper, or the like.

The volatile rust-proofing agent 32 is, for example, a powder, and the rust-proofing component is vaporized by heating. Temperature at which the rust-proofing component vaporizes is either room temperature or is set according to heating temperature to which the component is heated after being enclosed in the cylindrical member 20. As the volatile rust-proofing agent 32, for example, "VERZONE Eco Super K" (manufactured by Daiwa Fine Chemicals Co., Ltd.) or "Zerust (registered trademark) ActivPowder^{™} (LS)-10F" (manufactured by Northern Technologies International) can be used.

The scattering-suppressing material 33 is made of an oily substance (for example, wax) and is a viscous liquid or solid at room temperature. The scattering-suppressing material 33 may be, for example, a hot melt adhesive (glue stick).

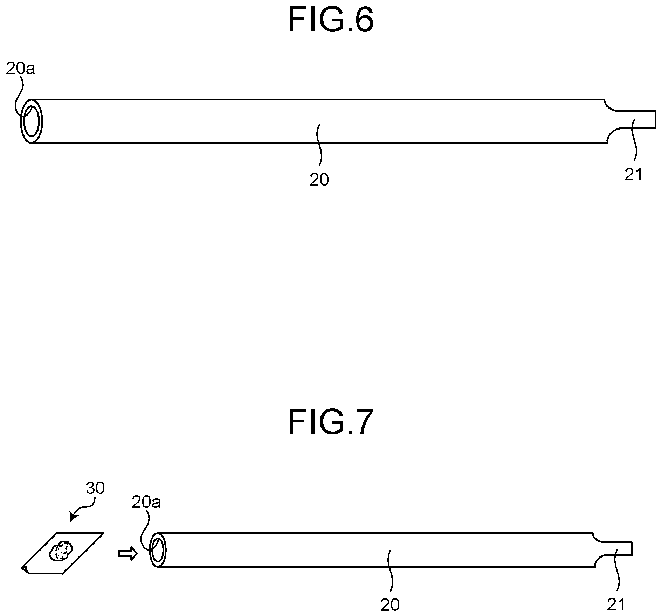

FIGS. 6 to 9 are diagrams for illustrating the rust-proofing treatment applied to the inside of the stabilizer according to the embodiment of the present invention. Here, the rust-proofing treatment in the case where a stabilizer is manufactured using the cylindrical member 20 illustrated in FIG. 3 will be described.

First, one end of the cylindrical member 20 is crushed to form the end into a flat shape, and the end of the cylindrical member 20 is closed (see FIG. 6). As a result, an opening portion 20a is formed on only one side of the cylindrical member 20, and a first end 21 having a flat shape is formed on the other end (first end forming step).

Thereafter, the rust-proofing material 30 is placed in the cylindrical member 20 (see FIG. 7). In this case, the rust-proofing material 30 is inserted from the opening portion 20a of the cylindrical member 20 (rust-proofing material inserting step).

In addition, when the rust-proofing material 30 does not come off from the cylindrical member 20, the rust-proofing material 30 may be inserted into the cylindrical member 20 before the first end 21 is formed.

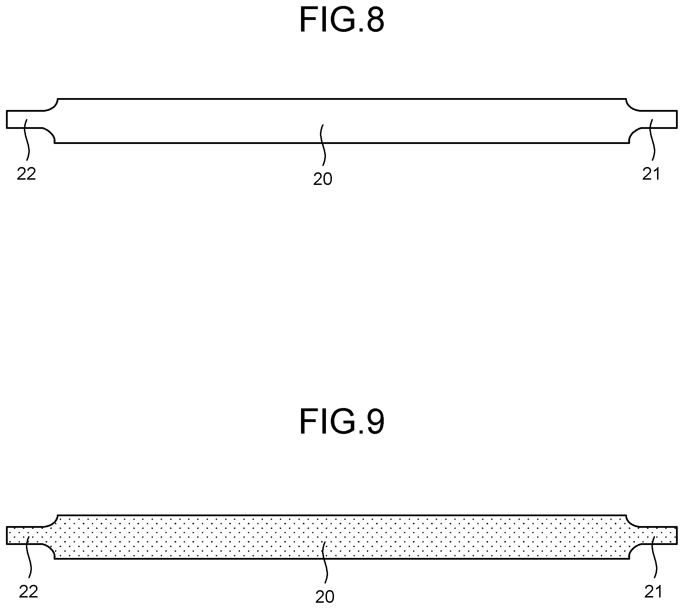

After the rust-proofing material 30 is accommodated, an end of the cylindrical member 20 on the opening portion 20a side is crushed to form the end into a flat shape, so that both ends of the cylindrical member 20 are closed (see FIG. 8). As a result, a second end 22 having a flat shape is formed at the end opposite to the first end 21 of the cylindrical member 20 (second end forming step). Therefore, the cylindrical member 20 has a shape closed at both ends by the first end 21 and the second end. This causes the rust-proofing material 30 to be sealed inside the cylindrical member 20.

Thereafter, the volatile rust-proofing agent 32 is vaporized (rust-proofing agent vaporization step: see FIG. 9). In this case, when the volatile rust-proofing agent 32 vaporizes at room temperature, it is left at room temperature for the time required for vaporization. On the other hand, when the vaporization temperature is high, the cylindrical member 20 is heated. The heating temperature is set to a temperature higher than the temperature at which the volatile rust-proofing agent 32 vaporizes, for example. In this case, the vaporized volatile rust-proofing agent 32 passes through a gap between the holding sheet 31 and the scattering-suppressing material 33 and permeates the scattering-suppressing material 33, and spreads throughout an internal space of the cylindrical member 20.

Although only the internal rust-proofing treatment is described here, when the stabilizer 1 is manufactured using the cylindrical member 20, known treatments such as shape forming, hardening, tempering, shot peening, and the like are carried out.

In this embodiment, the rust-proofing material 30, which is made by covering the volatile rust-proofing agent 32 placed on the holding sheet 31 with the scattering-suppressing material 33, is placed inside the cylindrical member 20 and subjected to heat treatment, thereby performing rust-proofing treatment. According to this embodiment, the powdered volatile rust-proofing agent 32 can be easily handled during the rust-proofing treatment, and as a result, the rust-proofing treatment of the inside of the stabilizer can be easily performed.

### (Modification Example)

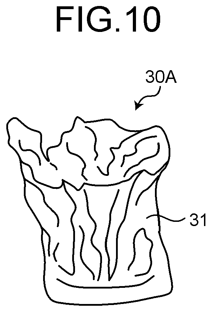

Next, a modification example of this embodiment will be described with reference to FIG. 10. In this modification example, a configuration of a rust-proofing material is different from that of the rust-proofing material according to the embodiment. FIG. 10 is a perspective view for illustrating the configuration of the rust-proofing material according to the modification example.

A rust-proofing material 30A is configured such that a holding sheet 31 holds a volatile rust-proofing agent 32 and a scattering-suppressing material 33. Specifically, in this modification example, the holding sheet 31 is bag-shaped and encases the volatile rust-proofing agent 32 and the scattering-suppressing material 33. In the illustrated example, the holding sheet 31 is formed into a bag shape by gathering outer edges of the sheet together, but the holding sheet 31 may also be formed into other shapes, such as by forming the holding sheet 31 into a cylindrical shape and then twisting both ends to encase the volatile rust-proofing agent 32 and the scattering-suppressing material 33.

The rust-proofing material 30A is handled during the rust-proofing treatment in the same manner as in the embodiment.

In this modification example, as in the above-described embodiment, the rust-proofing material 30A, which is made by wrapping the volatile rust-proofing agent 32 covered with the scattering-suppressing material 33 in the holding sheet 31, is placed inside the cylindrical member 20, and the rust-proofing treatment can be performed by subjecting it to heat treatment. According to this modification example, the powdered volatile rust-proofing agent 32 can be easily handled during the rust-proofing treatment, and as a result, the rust-proofing treatment of the inside of the stabilizer can be easily performed.

In addition, according to this modification example, the volatile rust-proofing agent 32 and the scattering-suppressing material 33 are wrapped in the holding sheet 31, which makes it easier to handle compared to when they are placed on a sheet as in the embodiment.

When the rust-proofing treatment is automated, the treatment is carried out while the cylindrical member 20 is being sent to each treatment position. For example, the rust-proofing material 30 is accommodated in the cylindrical member 20 by air or the like through the opening portion 20a of the cylindrical member 20 where the first end 21 is formed. After being accommodated, the cylindrical member 20 is transported to a predetermined treatment position, where the second end 22 is formed and the cylindrical member 20 is heated. By carrying out this process for each cylindrical member 20, rust-proofing treatment can be carried out continuously.

Although the embodiments for carrying out the present invention are described above, the present invention should not be limited to the above-described embodiments. For example, the present invention can be applied to a product in which a gas such as a rust-proofing agent is sealed on an inner peripheral surface of a cylindrical member.

In this manner, the present invention may include various embodiments not described here, and various design modifications may be made without departing from the technical idea defined by the claims.

### Industrial Applicability

As described above, the method for manufacturing a stabilizer according to the present invention is suitable for easily carrying out rust-proofing treatment on inside of the stabilizer.

### Reference Signs List

1 STABILIZER
10 MAIN BODY
11, 21 FIRST END
12, 22 SECOND END
20 CYLINDRICAL MEMBER
30, 30A RUST-PROOFING MATERIAL
31 HOLDING SHEET
32 VOLATILE RUST-PROOFING AGENT
33 SCATTERING-SUPPRESSING MATERIAL

## Claims

1. A rust-proofing treatment method for a cylindrical member, comprising:
a first end forming step of forming a first end at one end of the cylindrical member to seal the one end;
a rust-proofing material inserting step of inserting a rust-proofing material including a scattering-suppressing material, a volatile rust-proofing agent covered with the scattering-suppressing material, and a holding sheet configured to hold the volatile rust-proofing agent into the cylindrical member;
a second end forming step of forming a second end at an end of the cylindrical member opposite to the first end to seal the end after the rust-proofing material is accommodated in the cylindrical member; and
a rust-proofing agent vaporization step of vaporizing the volatile rust-proofing agent.

2. The rust-proofing treatment method for the cylindrical member according to claim 1, wherein the holding sheet has a sheet shape and is configured to hold the volatile rust-proofing agent and the scattering-suppressing material.

3. The rust-proofing treatment method for the cylindrical member according to claim 1, wherein the holding sheet has a bag shape and is configured to enclose the volatile rust-proofing agent and the scattering-suppressing material.

4. The rust-proofing treatment method for the cylindrical member according to any one of claims 1 to 3, wherein the scattering-suppressing material is a viscous liquid or solid at room temperature.
